Europäisches Patentamt

(19) European Patent Office

Office européen des brevets

(11) Publication number: **0 100 579**
**A1**

(12) # EUROPEAN PATENT APPLICATION

(21) Application number: **83201144.9**

(22) Date of filing: **01.08.83**

(51) Int. Cl.³: **F 16 L 58/10**
**F 16 L 23/00**

(30) Priority: **02.08.82 US 404026**

(43) Date of publication of application:
**15.02.84 Bulletin 84/7**

(84) Designated Contracting States:
**BE DE FR IT NL**

(71) Applicant: **THE DOW CHEMICAL COMPANY**
**Dow Center 2030 Abbott Road Post Office Box 1967**
**Midland Michigan 48640(US)**

(72) Inventor: **Prueter, Elton Delmont**
**1400 Riser**
**Saginaw Michigan 48603(US)**

(74) Representative: **Urbanus, Henricus Maria, Ir. et al,**
**c/o Vereenigde Octrooibureaux Nieuwe Parklaan 107**
**NL-2587 BP 's-Gravenhage(NL)**

(54) Flanged plastic lined pipe and method for the preparation thereof.

(57) Plastic lined metal pipe (11) is flared to form a flange (14)
and the flanged portions of the liner (12) and metal pipe (11)
are adhered together with a synthetic resinous adhesive (17).
No heating of the liner is required to heat soften the plastic
liner material to deform the liner and to thereby form a
flange (14) on the liner.

EP 0 100 579 A1

## FLANGED PLASTIC LINED PIPE AND METHOD
## FOR THE PREPARATION THEREOF

For many years, pipes and like conduits have been employed to transport liquids of varying corrosive nature. Oftentimes, materials which provide the desired resistance to corrosion do not provide adequate physical properties to resist the stresses normally applied to a pipe or similar conduit. Therefore, two-layer metal pipes have been employed wherein a corrosion resistant lining is applied to the metal pipe with the lining having the desired physical resistance, and being made of, for example, rubber or wood. Of considerable commercial importance are lined steel pipes which are lined with a thermoset or thermoplastic resins. For many applications, a particularly desirable combination is a thermoplastic liner disposed within a pipe as disclosed in U.S. Patent 4,313,625, for example.

Thermoplastic lined pipes may be joined in a variety of manners. However, one of the more common methods of joining plastic lined pipes is to provide a flange on a pipe and deform a portion of the liner over at least a portion of the flange, so that when two flanged ends are in abutting relationship, the deformed liner portions are in contact with each other. Therefore, the metal of the pipe is protected from any corrosive liquid flowing therein. Flanging of plastic lined pipes is well known in the art and is set forth in, for example, the following U.S. Patents, 1,596,114; 2,779,996; 2,907,103; 3,148,896; 3,335,484; 3,383,750; 3,390,042; 3,448,491; 3,467,505; 3,650,550; 3,742,590; 3,744,115; 3,828,823; 3,921,673; 4,302,183.

U.S. Patent 3,744,115 describes a particularly desirable means of flanging in which the terminal portions of the liner and the pipe are deformed hydraulically by means of an elastomeric plug. Frequently, when the hydraulic pressure of the plug is released, the lining portion which has been deformed to form the flange, tends to spring back or creep back to assume a generally frusto-conical configuration. If a bolted flange connection is employed, generally the force applied by the bolts will conform the liner flange portion to the pipe flange portion. However, such an approach requires bolts which are usually longer than those employed with conventional flange joints in a pipe of like size. Alternatively, heat and pressure may be applied to the flanged portion of the liner to cause it to conform to the flange of the pipe.

It would be desirable if there were available an improved flanged lined pipe and method of production which did not require the application of heat to conform the liner flange to the pipe flange.

The present invention more particularly resides in a plastic lined pipe having a synthetic resinous pressure deformable liner disposed within a pressure deformable metal pipe said plastic lined pipe having at least one end defining a radially outwardly projecting flange composed of deformed metal of the metal pipe and deformed plastic of the liner, characterized by an adhesive layer disposed between the metal pipe flange and the plastic liner flange for adhering the metal pipe flange and the liner flange together.

Also contemplated within the scope of the present invention is an improved method for the preparation of a flange on at least one end of a plastic lined pipe, the plastic lined pipe comprising a deformable metal pipe having disposed therein a pressure deformable synthetic resinous liner, comprising the steps of deforming one end of the lined pipe hydraulically to form a generally radially extending flange, the radially extending flange comprising a metal pipe flange portion and a resinous liner flange portion, removing the hydraulic pressure from the lined pipe end thereby causing the plastic liner flange portion to separate from the metal pipe flange portion, applying an adhesive to the space between the metal and plastic liner flanges, applying pressure to the plastic liner flange portion to thereby conform the plastic liner portion to the metal pipe flange portion and permitting the adhesive to cure and adhere the plastic liner flange to the metal pipe flange.

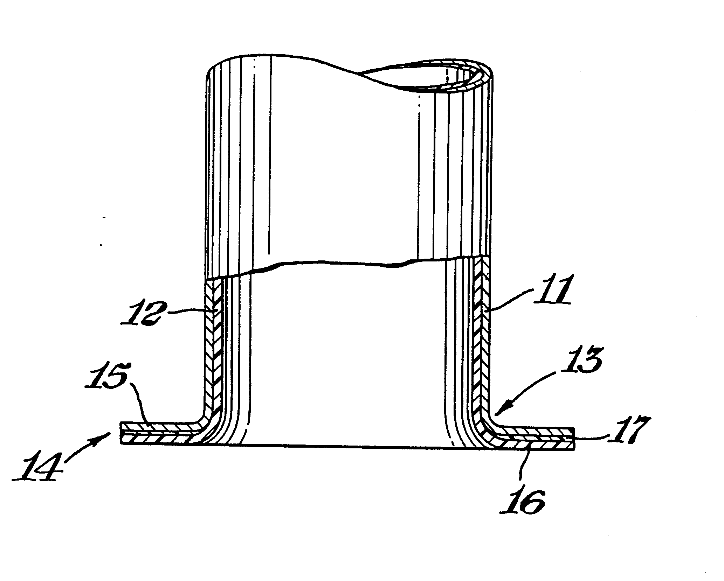

The single Figure illustrates a part cross--sectional view of a lined pipe end comprising a deformable metal pipe 11 having disposed therein a pressure deformable thermoplastic liner 12. The lined pipe has an end 13 which has been radially outwardly deformed to form a flange 14 which comprises a flange 15 formed by the deformation of the metal pipe 11 and a flange 16 formed by the deformation of the thermoplastic liner 12. An adhesive layer 17 in accordance with the invention is disposed between the flanges 15 and 16 and is adhered to the flanges 15 and 16.

A wide variety of plastic lined pipes may be employed in the practice of the present invention. The essential requirement is that the metal pipe and its plastic liner are capable of being deformed under pressure to provide the flange 14. The most common metal pipe employed for such lined pipes is steel, pipes of varying weights and metals other than steel may also be employed. A wide variety of thermoplastic materials may be utilized as the liner, the selection being based primarily on availability and chemical resistance to the material being handled. More common thermoplastic liners, for example, are made of polytetrafluoroethylene (PTFE), copolymers of PTFE, polyvinylidene fluoride, polyvinylidene chloride and polypropylene. In order to obtain an adequate bond between the liner flange and the pipe flange, it is generally desirable to clean the surfaces to be joined prior to the application of the adhesive. Cleaning can be accomplished with a solvent, a wire brush or by sand blasting. In the case of some synthetic resinous materials such as PTFE, chemical surface etching of the surfaces to be joined may be employed. Many different adhesives may be used such as, for example, isocyanate, polyurethane, or fast setting epoxy adhesives. However, particularly desirable are the anaerobic adhesives since they have a long "Pot" life and oftentimes a short cure time. Other useable adhesives are set forth in U.S. Patents 3,832,334; 3,851,017; 3,855,040; 3,922,449; 3,970,505; 4,007,323; 4,038,345; 4,038,475; 4,102,945; 4,103,081; 4,105,715; and 4,180,640. When adjacent surfaces of the pipe flange and the liner flange have been cleaned, the adhesive is applied and the liner flange clamped against the conduit flange for a sufficient length of time for the selected adhesive to cure and bond the two flanges together.

Example

A 7.62 cm (3-inch) diameter steel pipe lined with about a 0.32 cm (one-eighth inch) thick polypropylene liner was cut, cleaned and the terminal end flared hydraulically employing the method and apparatus disclosed in U.S. Patent 3,744,155. On removal of the hydraulic pressure, the outermost portion of the polypropylene liner flange was spaced somewhat (in a frusto-conical configuration) from the metal flange. Adjacent surfaces of the steel flange and the polypropylene liner flange were sand blasted; the end portion of the lined pipe was then positioned in a clamping jig and the adjacent surfaces of the steel flange and the polypropylene liner flange were coated with an anaerobic adhesive commercially available under the trade designation of Superbonder No. 495, manufactured by the Loctite Corporation. After being clamped for a period of ten minutes, the pipe was removed from the clamping jig and the polypropylene liner flange was firmly adhered to the steel flange. Similar results were obtained when 2.5; 5 and 10 cm (one-, two-, and four-inch) diameter polypropylene lined pipe was employed. The 2.5 and 5 cm (one- and two-inch) diameter pipes required a clamping time of from six to eight minutes, whereas the 10 cm (four-inch) diameter pipe required from ten to fifteen minutes.

30,789-F

CLAIMS

1. A plastic lined pipe having a synthetic resinous pressure deformable liner disposed within a pressure deformable metal pipe, said plastic lined pipe having at least one end defining a radially outwardly projecting flange composed of deformed metal of the metal pipe and deformed plastic of the liner, characterized by an adhesive layer disposed between the metal pipe flange and the plastic liner flange for adhering the metal pipe flange and the liner flange together.

2. The conduit of Claim 1 characterized in that the liner material is a polymer selected from polytetrafluoroethylene, polyvinylidene fluoride, polyvinylidene chloride, or polypropylene.

3. The conduit of Claim 1 characterized in that the metal pipe is formed of steel.

4. The conduit of Claim 1 characterized in that the adhesive layer is an anaerobic adhesive.

5. The conduit of Claim 1 characterized in that the adhesive layer is an epoxy adhesive.

6. A method for the preparation of a flange on at least one end of a plastic lined pipe, the plastic lined pipe comprising a deformable metal pipe having disposed therein a pressure deformable synthetic resinous liner, comprising the steps of deforming one end of the lined pipe hydraulically to form a generally radially extending flange, the radially extending flange comprising a metal pipe flange portion and a resinous liner flange portion, removing the hydraulic pressure from the lined pipe end thereby causing the plastic liner flange portion to separate from the metal pipe flange portion; applying an adhesive to the space between the metal and plastic liner flanges, applying pressure to the plastic liner flange portion to thereby conform the plastic liner portion to the metal pipe flange portion, and permitting the adhesive to cure and adhere the plastic liner flange to the metal pipe flange.

7. The method of Claim 6 characterized by the step of cleaning adjacent surfaces of the metal pipe flange and the plastic liner flange prior to application of the adhesive to the space between said flanges.

8. The method of Claim 6 characterized by selecting an anaerobic adhesive.

9. The method of Claim 6 characterized by selecting an epoxy adhesive.

10. The method of Claim 6 characterized in that the resinous liner is selected from polytetrafluoroethylene, copolymers of polytetrafluoroethylene, polyvinylidene fluoride, polyvinylidene chloride, or polypropylene.

# EUROPEAN SEARCH REPORT

| | DOCUMENTS CONSIDERED TO BE RELEVANT | | EP 83201144.9 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| X | US - A - 3 335 758 (E.C. BERTOLET JR) <br><br> * Totality * <br><br> ---- | 1,2,3, 6,10 | F 16 L 58/10 <br> F 16 L 23/00 |

|  |
|---|
| TECHNICAL FIELDS SEARCHED (Int. Cl. ³) |
| F 16 L 9/00 <br> F 16 L 13/00 <br> F 16 L 23/00 <br> F 16 L 47/00 <br> F 16 L 58/00 <br> B 29 C 27/00 |

The present search report has been drawn up for all claims

| Place of search | Date of completion of the search | Examiner |
|---|---|---|
| VIENNA | 14-10-1983 | SCHUGANICH |